# FASCICULE DE BREVET EUROPEEN

(11) **EP 2 782 785 B1**
(45) Date de publication et mention de la délivrance du brevet: **03.02.2016**
(21) Numéro de dépôt: 12806537.2
(22) Date de dépôt: 19.11.2012
(51) Int. Cl.: B60R 11/02, F16B 5/02, F16B 37/00

(54) **AGENCEMENT D'UN RECEPTACLE COMPORTANT DES MOYENS DE FIXATION PERFECTIONNES**
ANORDNUNG EINES BEHÄLTERS MIT VERBESSERTER BEFESTIGUNGSVORRICHTUNG
ARRANGEMENT OF A RECEPTACLE WITH IMPROVED FIXING MEANS

(30) Priorité: 21.11.2011 FR 1160570
(43) Date de publication de la demande: 01.10.2014
(73) Titulaire: Peugeot Citroën Automobiles SA, 78140 Vélizy Villacoublay (FR)
(72) Inventeur: ZALESNY, Marc, F-95130 Franconville (FR)
(86) Numéro de dépôt international: PCT/FR2012/052671
(87) Numéro de publication internationale: WO 2013/076414

(56) Documents cités:
- WO-A1-2010/095345
- DE-A1-102008 028 734

## Description

L'invention concerne un agencement d'un réceptacle d'une planche de bord de véhicule automobile permettant le montage d'un boîtier permettant de rajouter un appareil multimédia en option, sans dégrader la qualité perçue du réceptacle démuni de cette option.

DE 10 2008 028734 divulgue un agencement d'un réceptacle selon le préambule de la revendication 1.

Sur les véhicules, il est connu de rajouter des dispositifs en options suivant le souhait de l'utilisateur. Bien souvent, dans les véhicules il est prévu pour adapter ces dispositifs des emplacements spécifiques comportant déjà des perçages ouverts ou obturés par exemple par des bouchons, afin d'assurer une qualité relativement correcte.

L'invention a pour objectif de palier les inconvénients de l'art antérieur en proposant un agencement d'un réceptacle destinée à éviter la préexistence d'ouvertures pour permettre la pose d'un boîtier de réception d'un appareil multimédia, améliorant la qualité perçue par l'utilisateur potentiel du vide poche.

A cet effet l'invention propose un agencement d'un réceptacle d'une planche de bord apte à recevoir un élément additionnel fixé par vissage caractérisé en ce que la surface interne de la paroi du réceptacle ne comporte pas d'ouverture d'engagement d'une vis et que la paroi externe de la paroi comporte au moins un moyen d'ancrage d'une vis destiné à absorber la dispersion transversale de l'extrémité de la dite vis suivant une direction.

De préférence, le moyen d'ancrage est un fût de forme oblongue.

Selon un mode de réalisation préféré de l'invention, le fût à des parois sensiblement égale à celle de l'épaisseur de la paroi du réceptacle.

Selon un autre mode de réalisation de l'invention, le fût est renforcé sur ses parois extérieures par des pattes disposées perpendiculairement à la paroi du fût et solidaires du réceptacle.

De manière optionnelle, les pattes sont de formes sensiblement triangulaires et sont disposées régulièrement autour du fût de forme oblongue.

Avantageusement, les pattes viennent de matière avec le fût et le réceptacle.

Préférentiellement, le fût présente suivant sa longueur, une ouverture oblongue qui est resserrée sur son axe médian. Avantageusement, l'ouverture est réalisée par l'intersection de deux cercles sécants.

L'invention concerne également l'agencement d'un réceptacle d'une planche de bord apte à recevoir un élément additionnel fixé par vissage, ayant les caractéristiques susmentionnées.

L'invention sera bien comprise et d'autres aspects et avantages apparaîtront clairement à la lecture de la description qui suit donnée à titre d'exemple par rapport aux figures annexées sur lesquelles :
- la figure 1 présente une vue générale de profil d'un vide poche d'une planche de bord de véhicule, montrant un fût intégré au vide poche, destiné à recevoir une vis suivant l'invention.
- la figure 2 montre une vue en section, illustrant un exemple de montage d'une pièce à l'intérieur du vide poche à l'aide d'une vis engagée dans le fût suivant l'invention.
- la figure 3 montre une vue de face agrandie d'un fût intégré au vide poche recevant l'extrémité filetée d'une vis.

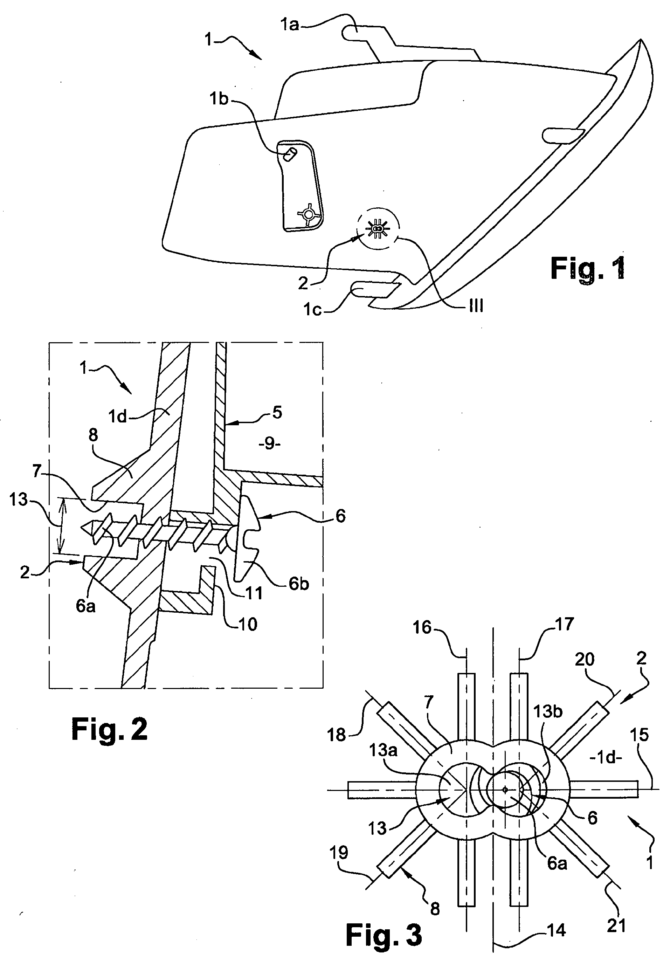

On se référera en premier lieu à la figure 1 montrant une vue générale de profil d'un vide poche 1 d'une planche de bord de véhicule, montrant plus particulièrement un fût 2 intégré au vide poche 1, destiné à recevoir une vis suivant l'invention. Le vide poche 1 est un réceptacle qui a une forme générale adaptée à l'emplacement disponible pour l'intégrer dans la planche de bord d'un véhicule. Par conséquent, les dimensions de cette forme peuvent varier sur sa profondeur, voire sa largeur. Le vide poche comporte sur sa surface extérieure des d'ancrages 1a, 1b, 1c destiné à le fixer dans l'emplacement prévu à cet effet dans la planche de bord. Le fût 2 est placé sur la paroi externe du vide poche 1, à une position déterminée permettant la fixation d'un élément additionnel qui peut-être par exemple un boîtier destinée à recevoir un appareil multimédia.

La figure 2 montre une vue en section, illustrant un exemple de montage d'un boîtier 5 à l'intérieur du vide poche 1 à l'aide d'une vis 6 engagée dans le fût 2 suivant l'invention. La paroi 1d du vide poche 1 à une épaisseur constante relativement faible. Pour améliorer la qualité perçue, il n'y pas d'ouvertures préexistantes dans le vide poche 1. Le fût 2 est représenté sur sa longueur et ses parois 7 sont renforcées par des pattes 8 de formes triangulaires constitutives de la paroi 1d du vide poche et de la paroi 7 du fût 2. Le boîtier 5 à monter dans le vide poche 1 comporte un logement 9 de réception d'un appareil multimédia et un bossage 10 comportant une ouverture 11 pour le passage d'une vis 6. Compte tenu de la longueur de la vis 6, l'outil en prise dans l'empreinte de la tête de la vis 6, peut entraîner une dispersion transversale de l'extrémité 6a de la pointe de la vis 6 suivant une direction privilégié, lorsque celle-ci est engagée dans la paroi 1d du vide poche 1. En conséquence, l'extrémité 6a de la pointe de la vis 6 peut varier dans un sens ou dans l'autre suivant la double flèche 13. Afin de garantir un bon ancrage de la vis 6, et une bonne tenue mécanique du boîtier 5, le fût 2 de réception de la vis 6 est oblong et calibré en largeur en conséquence.

La figure 3 montre une vue de face agrandie d'un fût 2, visible sur la figure 1, intégré sur la paroi 1d du vide poche 1 recevant l'extrémité 6a filetée d'une vis 6. La vue montre plus spécifiquement la forme du fût 2 oblong. Les parois 7 du fût 2 ont une épaisseur sensiblement égale à celle du vide poche 1. Les parois 7 sont renforcées par les pattes 8 de forme triangulaires constitutives de la paroi 1d du vide poche et de la paroi 7 du fût 2 réparties régulièrement autour de l'ouverture 13 oblongue. L'ouverture 13 est resserrée suivant l'axe médian 14 et elle résulte de l'intersection de deux cercles sécants 13a et 13b. Les pattes 8 sont disposées sur l'axe 15 longitudinal de l'ouverture 13 oblongue et les axes 16, 17 perpendiculaires des cercles 13a et 13b ainsi que sur les axes 18, 19, 20, 21 d'angle 45 degrés passant par le centre des cercles 13a et 13b, suivant l'axe 15 longitudinal, ce qui dans cette configuration fournit un résultat de 10 pattes 8 de renfort. Sur la vue, l'extrémité de la vis 6 est engagée dans la paroi 1d du vide poche 1 et vient en prise dans la paroi interne du fût 2 et dans ce cas dans la matière résultante de la partie médiane de l'ouverture 13 oblongue afin de procurer un ancrage résistant du boîtier à monter dans le vide poche 1. Le vide poche 1 peut comporter bien évidement autant de fût 2 que nécessaire pour assurer la bonne tenue du boîtier 5 à assembler.

Bien entendu, il va de soi que l'invention ne se limite pas à l'exemple de réalisation plus spécialement décrit et représenté en référence aux dessins annexés ; elle en embrasse au contraire toutes les variantes.

## Revendications

1. Agencement d'un réceptacle (1) d'une planche de bord apte à recevoir un élément additionnel (5) fixé par vissage, la surface externe de la paroi (1d) comportant au moins un moyen d'ancrage (2) d'une vis (6) destiné à absorber la dispersion transversale de l'extrémité de la dite vis (6) suivant une direction **caractérisé en ce que** la surface interne de la paroi (1d) du réceptacle (1) ne comporte pas d'ouverture d'engagement d'une vis (6).

2. Agencement d'un réceptacle selon la revendication 1 **caractérisé en ce que** le moyen d'ancrage (2) est un fût de forme oblongue.

3. Agencement d'un réceptacle (1) selon l'une des revendications 1 ou 2, **caractérisé en ce que** le fût (2) à des parois sensiblement égale à celle de l'épaisseur de la paroi du réceptacle.

4. Agencement d'un réceptacle (1) selon l'une quelconque des revendications précédentes, **caractérisé en ce que** le fût (2) à des parois d'une hauteur sensiblement égale à la largeur du fût de forme oblongue.

5. Agencement d'un réceptacle (1) selon l'une quelconque des revendications précédentes, **caractérisé en ce que** le fût (2) est renforcé sur ses parois (7) extérieures par des pattes (2) disposées perpendiculairement à la paroi (2) du fût (2) et solidaires du réceptacle (1).

6. Agencement d'un réceptacle (1) selon la revendication 5, **caractérisé en ce que** les pattes (8) sont de formes sensiblement triangulaires et sont disposées régulièrement autour du fût (2) de forme oblongue.

7. Agencement d'un réceptacle (1) selon l'une des revendications 5 ou 6, **caractérisé en ce que** les pattes (8) viennent de matière avec le fût (2) et le réceptacle (1).

8. Agencement d'un réceptacle (1) selon l'une quelconque des revendications précédentes, **caractérisé en ce que** le fût (2) présente suivant sa longueur, une ouverture (13) oblongue qui est resserrée sur son axe médian (14).

9. Agencement d'un réceptacle (1) selon l'une quelconque des revendications précédentes, **caractérisé en ce que** l'ouverture (13) est réalisée par l'intersection de deux cercles (13a) (13b) sécants.

10. Véhicule automobile comportant un réceptacle (1) d'une planche de bord apte à recevoir un élément additionnel (5) fixé par vissage, selon l'une quelconque des revendications 1 à 9.

## Patentansprüche

1. Anordnung eines Behälters (1) einer Instrumententafel, die geeignet ist, ein zusätzliches Element (5) aufzunehmen, das durch Schrauben befestigt ist, wobei die externe Oberfläche der Wand (1d) mindestens ein Verankerungsmittel (2) einer Schraube (6) umfasst, das dazu bestimmt ist, die Querdispersion des Endes der Schraube (6) entlang einer Richtung zu absorbieren, **dadurch gekennzeichnet, dass** die innere Oberfläche der Wand (1d) der Aufnahme (1) keine Einführöffnung einer Schraube (6) umfasst.

2. Anordnung eines Behälters nach Anspruch 1, **dadurch gekennzeichnet, dass** das Verankerungsmittel (2) ein länglicher Schacht ist.

3. Anordnung eines Behälters (1) nach einem der Ansprüche 1 oder 2, **dadurch gekennzeichnet, dass** der Schaft (2) Wände im Wesentlichen gleich derjenigen der Stärke der Wand des Behälters hat.

4. Anordnung eines Behälters (1) nach einem der vorhergehenden Ansprüche, **dadurch gekennzeichnet, dass** der Schaft (2) Wände mit einer Höhe hat, die im Wesentlichen gleich der Breite des Schafts mit länglicher Form ist.

5. Anordnung eines Behälters (1) nach einem der vorhergehenden Ansprüche, **dadurch gekennzeichnet, dass** der Schaft (2) auf seinen externen Wänden (7) durch Pratzen (2) verstärkt ist, die senkrecht zu der Wand (2) des Schafts (2) angeordnet und fest mit dem Behälter (1) verbunden sind.

6. Anordnung eines Behälters (1) nach Anspruch 5, **dadurch gekennzeichnet, dass** die Pratzen (8) im Wesentlichen dreieckige Formen haben und regelmäßig um den Schaft (2) mit länglicher Form angeordnet sind.

7. Anordnung eines Behälters (1) nach einem der Ansprüche 5 oder 6, **dadurch gekennzeichnet, dass** die Pratzen (8) aus einem Stück mit dem Schaft (2) und dem Behälter (1) gearbeitet sind.

8. Anordnung eines Behälters (1) nach einem der vorhergehenden Ansprüche, **dadurch gekennzeichnet, dass** der Schaft (2) entlang seiner Länge eine längliche Öffnung (13) aufweist, die auf seiner Mittenachse (14) verjüngt ist.

9. Anordnung eines Behälters (1) nach einem der vorhergehenden Ansprüche, **dadurch gekennzeichnet, dass** die Öffnung (13) durch die Schnittstelle von zwei einander schneidenden Kreisen (13a) (13b) hergestellt ist.

10. Kraftfahrzeug, das einen Behälter (1) einer Instrumententafel umfasst, die geeignet ist, ein zusätzliches Element (5), das durch Schrauben befestigt ist, nach einem der Ansprüche 1 bis 9 aufzunehmen.

## Claims

1. An arrangement of a receptacle (1) of a dashboard capable of receiving an additional element (5) fastened by screwing, the outer surface of the wall (1d) comprising at least one means (2) for anchoring a screw (6) intended to absorb the transverse dispersion of the end of said screw (6) in one direction, **characterized in that** the inner surface of the wall (1d) of the receptacle (1) does not comprise an opening for engaging s screw (6).

2. The arrangement of a receptacle according to Claim 1, **characterized in that** the anchoring means (2) is a shaft of oblong shape.

3. The arrangement of a receptacle (1) according to one of Claims 1 or 2, **characterized in that** the shaft (2) has walls substantially equal to that of the thickness of the wall of the receptacle.

4. The arrangement of a receptacle (1) according to any one of the preceding claims, **characterized in that** the shaft (2) has walls of a height substantially equal to the width of the shaft of oblong shape.

5. The arrangement of a receptacle (1) according to any one of the preceding claims, **characterized in that** the shaft (2) is reinforced on its outer walls (7) by lugs (2) disposed perpendicularly to the wall (2) of the shaft (2) and integral with the receptacle (1).

6. The arrangement of a receptacle (1) according to Claim 5, **characterized in that** the lugs (8) are of substantially triangular shape and are disposed regularly around the shaft (2) of oblong shape.

7. The arrangement of a receptacle (1) according to one of Claims 5 or 6, **characterized in that** the lugs (8) are produced in one piece with the shaft (2) and the receptacle (1).

8. The arrangement of a receptacle (1) according to any one of the preceding claims, **characterized in that** the shaft (2) has, along its length, an oblong opening (13) which is constricted on its median axis (14).

9. The arrangement of a receptacle (1) according to any one of the preceding claims, **characterized in that** the opening (13) is realized by the intersection of two secant circles (13a) (13b).

10. A motor vehicle comprising a receptacle (1) of a dashboard capable of receiving an additional element (5) fastened by screwing, according to any one of Claims 1 to 9.
